# EUROPEAN PATENT APPLICATION

(11) **EP 0 526 057 A1**
(43) Date of publication of application: **03.02.1993**
(21) Application number: 92306583.3
(22) Date of filing: 17.07.1992
(51) Int. Cl.: F01D 5/28

(54) **Layup of composite fan blades/vanes**

(30) Priority: 22.07.1991 US 733487
(71) Applicant: GENERAL ELECTRIC COMPANY, Schenectady, NY 12345 (US)
(72) Inventor: Schilling, Jan Christopher, Middletown, Ohio 45044 (US); Stephens, Paul Stanley, Cincinnati, Ohio 45241 (US)
(74) Representative: Pratt, Richard Wilson

(57) **Abstract**

The present invention provides composite blade tip configurations for preventing delamination at the tip of a composite rotor blade. The invention comprises a plurality of first thin successive layers of a first composite material (20) wherein the first thin layers are stacked in a predetermined configuration such that the weakest shear plane is positioned towards the blade surface. The invention further comprises joining material (23) for joining the first thin layers to each other. The invention further comprises a plurality of second thin successive layers of a second composite material (21) having a different modulus of elasticity than that of the first thin layers wherein the second layers are stacked on the first layers such that the edge of the blade tip is even. The invention further includes joining material (23) also being used for joining the second thin layers to each other and to the first thin layers. The invention further comprises a cloth fiber protective covering (24) completely enclosing the first and second thin layers.

## Description

### Field of Invention

The present invention relates in general to composite blades, and more particularly, to configurations of composite blade tips for preventing delamination at the blade tip.

### Background of the Invention

Composite blades comprise thin layers of composite materials such as carbon, glass, boron, kevlar, titanium, etc. Hereinafter, the term composite materials, is intended to include to unidirectional or multidirectional materials. These thin layers may be stacked and held in place by a joining material, for example, epoxy or plastic. In turbomachinery applications, for example aircraft engines, blade loads on a rotor are a result of gas loads and centrifugal loads. The blade's internal loads are transferred from one layer to the next by shear through the joining material. Since the joining material may be weaker than the base material, great care must be taken in the positioning of the load carrying base material. This is especially important at the tip section of the blade since high shear loads may exist at the tip.

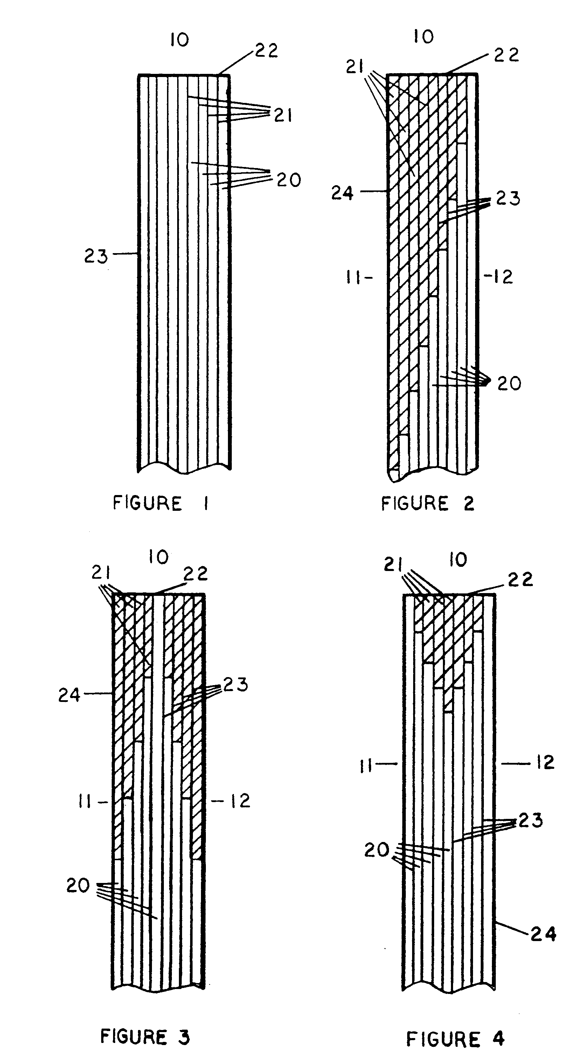

Figure 1 illustrates an enlarged section of a conventional composite blade tip. Blade tip 10 comprises a plurality of composite layers 20 which are held together with joining material 21. Joining material 21 may, for example, comprise epoxy or plastic. Composite layers 20 may extend to tip 22 of blade tip 10. Blade tip 10 further comprises cloth fiber protective covering 23 completely enclosing composite layers 20.

The demand for better performing aircraft engines has resulted in the fan rotor blades being subjected to more severe operating conditions. As a result, great care must be taken in designing composite fan rotor blade tips to handle the high shear loads that may occur during operations. High shear loads may result from, for example, tip to case rubs or foreign object injestion.

It would be advantageous to design an improved composite blade tip structure in which delamination is reduced during exposure to high shear loads. The blade tip may comprise a configuration of composite layers in which the intemal loads are redistributed in a manner which limits delamination.

### Summary of Invention

The present invention provides composite blade tip configurations for preventing delamination at the tip of a composite rotor blade. The invention comprises a plurality of first thin successive layers of a first composite material wherein the first thin layers are stacked in a predetermined configuration such that the weakest shear plane is positioned towards the blade surface. The invention further comprises joining material for joining the first thin layers to each other. The invention further comprises a plurality of second thin successive layers of a second composite material having a different modulus of elasticity than that of the first thin layers wherein the second layers are stacked on the first layers such that the edge of the blade tip is even. The invention further includes joining material also being used for joining the second thin layers to each other and to the first thin layers. The invention further comprises a cloth fiber protective covering completely enclosing the first and second thin layers.

### Brief Description of the Drawings

The novel features of the invention are set forth with particularity in the appended claims. The invention itself, however, both as to organization and method of operation, together with further objects and advantages thereof, may best be understood by reference to the following description taken in conjunction with the accompanying drawings in which:

FIG. 1 is an enlarged cross section view of a conventional composite blade tip.

FIG. 2 is an enlarged cross section view of an embodiment of a composite blade tip according to the present invention.

FIG. 3 is an enlarged cross section view of a further embodiment of a composite blade tip according to the present invention.

FIG. 4 is an enlarged cross section view of a further embodiment of a composite blade tip according to the present invention.

### Detailed Description of the Invention

Figure 2 illustrates an enlarged cross section of an embodiment of a composite blade tip according to the present invention. Blade tip 10 comprises a plurality of first thin successive layers 20 of a first composite material wherein first thin layers 20 are stacked such that they increase in length from pressure side 11 of blade tip 10 to suction side 12 of blade tip 10. Blade tip 10 further comprises a plurality of second thin successive layers 21 of a second composite material having a different modulus of elasticity than that of first thin layers 20 wherein second thin layers 21 are stacked on first thin layers 20 such that edge 22 of blade tip 10 is even. Blade tip 10 further comprises joining material 23 for joining first 20 and second 21 thin layers to each other. Blade tip 10 further comprises cloth fiber protective covering 24 completely enclosing first 20 and second 21 thin layers.

In a preferred embodiment, blade tip 10 is designed to position the weakest shear plane towards pressure side 11 of blade tip 10. First 20 or second 21 composite material may comprise carbon, glass, boron, kevlar, or titanium, however, graphite is the preferred material. Second composite material 21 may have a lower modulus of elasticity than that of first composite material 20 and is preferably glass. It would be obvious to those skilled in the art that any suitable material may be used as a substitute for the aforementioned preferred materials. Joining material 23 may comprise, for example, epoxy or plastic or any other suitable material, however epoxy is the preferred material. Graphite fibers woven into a cloth pattern is preferred for cloth fiber protective covering 24.

Figure 3 illustrates an enlarged cross section of a further embodiment of a composite blade tip according to the present invention. Blade tip 10 comprises a plurality of first thin successive layers 20 of a composite material wherein first thin layers 20 are stacked such that they increase in length from pressure side 11 of blade tip 10 to middle of blade tip 10 and first thin layers 20 being stacked decreasing in length from middle of blade tip 10 to suction side 12 of blade tip 10. Blade tip 10 further comprises a plurality of second thin successive layers 21 of a second composite material having a different modulus of elasticity than that of first thin layers 20 wherein second thin layers 21 are stacked on first thin layers 20 such that edge 22 of blade tip 10 is even. Blade tip 10 further comprises joining material 23 for joining first 20 and second 21 thin layers to each other. Blade tip 10 further comprises cloth fiber protective covering 24 completely enclosing first 20 and second 21 thin layers.

In a preferred embodiment, blade tip 10 is designed to position the weaker shear planes towards pressure side 11 and suction side 12 of blade tip 10. First composite material 20 may comprise carbon, glass, boron, kevlar, or titanium, however graphite is the preferred material. Second composite material 21 may have a lower modulus of elasticity than that of first composite material 20 and is preferably glass. It would be obvious to those skilled in the art that any suitable material may be used as a substitute for the aforementioned materials. Joining material 23 may comprise, for example, epoxy or plastic or any other suitable material, however epoxy is the preferred material. Graphite fibers woven into a cloth pattern is preferred for cloth fiber protective covering 24.

Figure 4 illustrates an enlarged cross section of a further embodiment of a composite blade tip according to the present invention. Blade tip 10 comprises a plurality of first thin successive layers 20 of a composite material wherein first thin layers 20 are stacked such that they decrease in length from pressure side 11 of blade tip 10 to middle of blade tip 10 and first thin layers 20 being stacked increasing in length from middle of blade tip 10 to suction side 12 of blade tip 10. Blade tip 10 further comprises a plurality of second thin successive layers 21 of a second composite material having a different modulus of elasticity than that of first thin layers 20 wherein second thin layers 21 are stacked on first thin layers 20 such that edge 22 of blade tip 10 is even. Blade tip 10 further comprises joining material 23 for joining first 20 and second 21 thin layers to each other. Blade tip 10 further comprises cloth fiber protective covering 24 completely enclosing first 20 and second 21 thin layers.

In a preferred embodiment, blade tip 10 is designed to position the weaker shear planes towards pressure side 11 and suction side 12 of blade tip 10. First composite material 20 may comprise carbon, glass, boron, kevlar, or titanium, however graphite is the preferred material. Second composite material 21 may have a lower modulus of elasticity than that of first composite material 20 and is preferably glass. It would be obvious to those skilled in the art that any suitable material may be used as a substitute for the aforementioned materials. Joining material 23 may comprise, for example, epoxy or plastic or any other suitable material, however epoxy is the preferred material. Graphite fibers woven into a cloth pattern is preferred for cloth fiber protective covering 24.

It would be obvious to those skilled in the art that the number of layers used in the blade and the manner in which they are stacked may be modified while still positioning the weaker shear planes towards the surfaces of the blade. Therefore, it is the intention of the applicant not to limit the scope of the invention to the attached figures. This variation in material modulus of elasticity may effectively change the shear distribution by distributing the high shear loads over more area or distributing the high shear loads over more of the higher strength material.

While preferred embodiments of the present invention have been shown and described herein, it will be obvious to those skilled in the art that such embodiments are provided by way of example only. Numerous variations, changes, and substitutions will now occur to those skilled in the art without departing from the invention.

## Claims

1. A composite blade wherein the blade tip comprises:
a plurality of first thin successive layers of a first composite material, said first layers being stacked in a predetermined configuration for positioning the weakest shear plane towards said blade surface;
a joining material for joining said thin layers to each other.

2. A composite blade according to claim 1 wherein said predetermined configuration includes said first thin layers being stacked such that they increase in length from pressure side of said blade to suction side of said blade tip.

3. A composite blade according to claim 2 and further comprising:
a plurality of second thin successive layers of a second composite material, said second layers being stacked on said first thin layers such that the tip of said second layers are aligned with the tip of said first layers, said joining material being used for joining said second thin layers to each other and to said first layers.

4. A composite blade according to claim 1 wherein said predetermined configuration for positioning said weakest shear plane at said blade tip surface includes said first thin layers being stacked such that they increase in length from pressure side of said blade to the middle of said blade tip and decrease in length from said middle of said blade tip to said suction side of said blade.

5. A composite blade according to claim 1 or 2 wherein said predetermined configuration for positioning said weakest shear plane at said blade tip surface includes said first thin layers being stacked such that they decrease in length from pressure side of said blade to the middle of said blade tip and increase in length from said middle of said blade tip to said suction side of said blade.

6. A composite blade according to claim 4 or 5 and further comprising:
a second plurality of thin successive layers of a second composite material, said second layers being stacked on said first thin layers such that the tip of said second layers are aligned with the tip of said first layers, said joining material being used for joining said second thin layers to each other and to said first layers.

7. A composite blade according to claim 6 and further comprising a cloth fiber protective covering completely enclosing said first and second thin layers.

8. A composite blade according to claim 7 wherein said second composite material includes a different modulus of elasticity than that of said first composite material.

9. A composite blade according to claim 8 wherein said first and second composite materials comprise at least one member selected from the group consisting of carbon, glass, boron, kevlar, and titanium.

10. A composite blade according to claim 9 wherein said second composite material has a lower modulus of elasticity than that of said first composite material.

11. A composite blade according to claim 10 wherein said first composite material comprises graphite, said second composite material comprises glass.
